# EUROPÄISCHE PATENTANMELDUNG

(11) **EP 2 348 370 A2**
(43) Veröffentlichungstag der Anmeldung: **27.07.2011**
(21) Anmeldenummer: 11151415.4
(22) Anmeldetag: 19.01.2011
(51) Int. Cl.: G05B 19/042, G05B 23/02

(54) **Einrichtung zum Ansteuern und Überwachen einer durch einen Aktor ansteuerbaren Gebäudeinstallation**

(30) Priorität: 25.01.2010 DE 102010000190
(71) Anmelder: Insta Elektro GmbH, 58509 Lüdenscheid (DE)
(72) Erfinder: Detzner, Peter, 58089 Hagen (DE); Mundinger, Harald, 58849 Herscheid (DE); Groll, Roland, 58515 Lüdenscheid (DE); Holtz, Friedhelm, 58511 Lüdenscheid (DE)
(74) Vertreter: Haverkamp, Jens

(57) **Zusammenfassung**

Eine Einrichtung zum Ansteuern und Überwachen des Zustandes und/oder der Stellung zumindest einer durch einen Aktor ansteuerbaren Gebäudeinstallation eines Gebäudeinstallationssystems umfasst zumindest eine in einem Raum 1 angeordnete, durch einen Aktor beeinflussbare Installation 17, 19, 21 sowie eine Einrichtung zum Ansteuern des Aktors. Die Einrichtung zum Ansteuern des Aktors verfügt über einen Sensor 2 zur Überwachung des Zustandes und/oder der Stellung der zumindest einen Installation 17, 19, 21. Der Sensor 2 umfasst eine Vielzahl, in einer zweidimensionalen Anordnung angeordnete optoelektronische Wandlerelemente aufweisendes Sensorelement 12, welches nach seiner Installation angeordnet ist, um den Zustand und/oder die Stellung der zumindest einen Installation 17, 19, 21 in dem Raum 1 erfassen zu können. Ferner verfügt der Sensor 2 über eine zum Auslesen und Auswerten des Sensorelementes 12 dienende Steuereinheit 13. Die Steuereinheit 13 verfügt über Mittel 14 zum Ansteuern des Aktors der zumindest einen Installation 17, 19, 21 in Abhängigkeit von der Auswertung von aus dem Sensorelement 12 ausgelesenen Daten.

Beansprucht ist ferner ein Verfahren zum Überwachen einer in einem Raum 1 angeordneten, durch einen Aktor beeinflussbaren Installation 17, 19, 21. Bei diesem Verfahren ist vorgesehen, dass zumindest ein durch einen Aktor der zumindest einen Installation 17, 19, 21 beeinflussbares Element ortsaufgelöst mittels eines bildgebenden Sensorelementes 12 überwacht wird, um den Zustand und/oder die Stellung der zumindest einen Installation 17, 19, 21 erfassen zu können. Für die Überwachung unterschiedlicher Bereiche des Raumes bzw. der darin installierten zumindest einen Installation 17, 19, 21 werden unterschiedliche Pixelgruppen eines bildgebenden Sensorelementes ausgewertet. In Abhängigkeit von dem Ergebnis der Auswertung der aus den Pixelgruppen ausgelesenen Daten erfolgten wird ein Aktor einer Installation über eine Steuereinheit angesteuert.

## Beschreibung

Die Erfindung betrifft eine Einrichtung zum Ansteuern und Überwachen des Zustandes und/oder der Stellung zumindest einer durch einen Aktor ansteuerbaren Gebäudeinstallation eines Gebäudeinstallationssystems mit zumindest einer in einem Raum angeordneten, durch einen Aktor beeinflussbaren Installation und einer Einrichtung zum Ansteuern des Aktors. Ferner betrifft die Erfindung ein Verfahren zum Überwachen einer in einem Raum angeordneten, durch einen Aktor beeinflussbaren Installation.

Gebäudeinstallationssysteme der in Rede stehenden Art dienen dem Zweck, unterschiedliche Installationen, wie Beleuchtung, Heizung, Belüftung und dergleichen datentechnisch miteinander zu vernetzen und je nach Auslegung des Systems auch mit der notwendigen Betriebsspannung zu versorgen. Die datentechnische Kommunikation wird typischerweise über ein Bussystem realisiert, an das die einzelnen Aktoren und/oder Sensoren der unterschiedlichen Installationen als Busteilnehmer angeschlossen sind. Angeschlossen an dem Bus ist ebenfalls eine Einrichtung zum Ansteuern der Aktoren. Angesteuert werden die Aktoren über eine zentrale Steuereinheit. Diese steuert den jeweils gewünschten Aktor in Abhängigkeit von benutzerseitig vorgenommenen Steuerbefehlen, beispielsweise durch Betätigen eines Tasters oder durch Eingabe eines Aktorbefehles an einer Bedienkonsole. Eine Ansteuerung von Aktoren kann auch über einen Regelkreis erfolgen, der neben dem zumindest einen Aktor auch zumindest einen Sensor zum Erfassen eines IST-Zustandes umfasst. Bei derartigen Regelsystemen handelt es sich beispielsweise um eine automatische Ansteuerung beispielsweise von Jalousien in Abhängigkeit von einem in einem Raum mittels eines Sensors erfassten Helligkeitswertes oder zur Ansteuerung einer automatischen Raumbeleuchtung, wenn durch einen Sensor festgestellt wird, dass eine Person den Raum betritt oder umgekehrt verlässt. Bei derartigen Regelsystemen verfügt jeder Raum typischerweise über ein Busteilsystem, welches über einen entsprechenden Knoten hierarchisch oder parallel an ein übergeordnetes Bussystem angeschlossen ist.

Bei Verwendung von Regelkreisen im Rahmen eines solchen Gebäudeinstallationssystems ist eine Überwachung der Aktoren bzw. der jeweilige Installationen hinsichtlich ihrer aktuellen IST-Stellung oder ihres IST-Zustandes erforderlich. Bei einem Heizregelkreis wird typischerweise ein Temperatursensor zum Erfassen der IST-Temperatur innerhalb des Raumes eingesetzt. Im Rahmen eines Beleuchtungsregelkreises werden ein oder mehrere Helligkeitssensoren verwendet. Zum Erfassen des Zutrittes und/oder der Belegung eines Raumes durch eine oder mehrere Personen dient ein Bewegungssensor. Diese Sensoren sind als Busteilnehmer konzipiert und werden von der zentralen Steuereinheit ausgelesen. Durch die Steuereinheit werden wiederum die jeweiligen Aktoren entsprechend der oder den gewünschten Vorgaben angesteuert.

Aus der vorstehenden Darstellung vorbekannter Gebäudeinstallationssysteme wird deutlich, dass zum Überwachen der Stellung und/oder des Zustandes unterschiedlicher Installationssysteme unterschiedliche Sensoren eingesetzt werden müssen. Dies bedeutet, dass die Zahl der Sensoren mit der Anzahl der in einem Raum installierten Regelsysteme ansteigt und dass für jeden Sensor ein Busteilnehmerplatz vorgesehen werden muss. Vor dem Hintergrund, dass die Sensoren typischerweise an unterschiedlichen Positionen im Raum angeordnet sein müssen, hat dieses einen entsprechend hohen Verkabelungsaufwand zur Folge.

Ausgehend von diesem diskutierten Stand der Technik liegt der Erfindung daher die Aufgabe zugrunde, eine eingangs genannte Einrichtung bzw. ein Überwachungsverfahren der eingangs genannten Art dergestalt weiterzubilden, dass mit diesem nicht nur eine Überwachung der Stellung und/oder des Zustandes eines oder mehrerer, in einem Raum befindlicher Installationen vor allem mit einem geringen Installationsaufwand möglich ist, sondern dass ein solches System zudem eine höhere Funktionalität aufweist.

Gelöst wird diese Aufgabe erfindungsgemäß durch eine eingangs genannte, gattungsgemäße Einrichtung, bei der diese zum Ansteuern des Aktors über einen Sensor zur Überwachung des Zustandes und/oder der Stellung der zumindest einen Installation verfügt, umfassend eine Vielzahl, in einer zweidimensionalen Anordnung angeordnete optoelektronische Wandlerelemente aufweisendes Sensorelement, nach seiner Installation in dem Raum angeordnet, um den Zustand und/oder die Stellung der zumindest einen Installation erfassen zu können, sowie eine zum Auslesen und Auswerten des Sensorelements dienende Steuereinheit, welche Steuereinheit Mittel zum Ansteuern des Aktors der zumindest einen Installation in Abhängigkeit von der Auswertung von aus dem Sensorelement ausgelesenen Daten umfasst.

Die verfahrensbezogene Aufgabe wird gelöst durch ein Verfahren, bei dem zumindest ein durch einen Aktor der zumindest einen Installation beeinflussbares Element ortsaufgelöst mittels eines bildgebenden Sensorelements überwacht wird, um den Zustand und/oder die Stellung der zumindest einen Installation erfassen zu können, wobei für die Überwachung unterschiedlicher Bereiche des Raumes bzw. der darin installierten zumindest einen Installation unterschiedliche Pixelgruppen des bildgebenden Sensorelementes ausgewertet werden und bei dem in Abhängigkeit von dem Ergebnis der Auswertung der aus den Pixelgruppen ausgelesenen Daten ein Aktor einer Installation über eine Steuereinheit angesteuert wird.

Diese Einrichtung eines Gebäudeinstallationssystems - gleiches gilt entsprechend für das beanspruchte Verfahren - verfügt raumbezogen über einen Sensor als Teil der Einrichtung zum Ansteuern des oder der Aktoren des zumindest einen Installationssystems. Der Sensor selbst umfasst zwei Module. Bei dem einen Modul handelt es sich um ein Sensorelement, gebildet aus einer Vielzahl, in einer zweidimensionalen Anordnung angeordneten optoelektronischen Wandlerelementen mit einer dem Sensorelement vorgeschalteten Optik, etwa einem Kamerachip. Mit diesem Sensorelement kann der von diesem erfasste Raum ortsaufgelöst betrachtet und die erfassten Bilddaten entsprechend ausgewertet werden. Als Sensorelement kann beispielsweise ein CCD-Element, beispielsweise in CMOS-Technik ausgeführt, eingesetzt werden. Als zweites Modul verfügt der Sensor über eine Steuereinheit zum Auslesen und Auswerten der Wandlerelemente des Sensorelements. Die Steuereinheit dient des Weiteren zum Ansteuern des Aktors der zumindest einen Installation, und zwar hinsichtlich ihrer mechanischen Position und/oder ihres elektrischen Zustandes. Diese Ansteuerung erfolgt in Abhängigkeit von der Auswertung der aus dem Sensorelement ausgelesenen Bilddaten. Zu diesem Zweck verfügt die Steuereinheit über entsprechende Mittel zum Ansteuern eines Aktors. Bei diesen Mitteln handelt es sich um Funktionalitäten, mit denen die notwendigen Befehle an einen Aktor übermittelt werden können. Dieses kann, wenn der Sensor und der Aktor der Installation über eine Datenleitung, beispielsweise einen Bus miteinander verbunden sind, drahtgebunden erfolgen. Ebenfalls ist eine Datenübertragung von der Steuereinheit zu einem solchen Aktor drahtlos möglich, beispielsweise auf einer IR-Strecke. Bei den ausgelesenen Bilddaten kann es sich beispielsweise um Bilddaten der Installation selbst, beispielsweise einer Jalousie, einer Leuchte oder dergleichen und/oder eines die Installation verstellenden Aktors handeln, sollte dieser für eine solche Überwachung geeignet sein. Insofern ist der Sensor hinsichtlich des von diesem überwachten Raumes ortsfest in Bezug auf die zumindest eine von einem Aktor beeinflussbare, beispielsweise verstellbare Installation angeordnet mit der Folge, dass bestimmte Pixelgruppierungen des Sensorelementes bestimmten Installationen bzw. Aktoren oder auch anderen, von vorgenannten Installationen unabhängigen, zu überwachenden Bereichen oder Gegenständen zugeordnet werden können. Daher ist über die Steuereinheit die Ansteuerung bzw. Verstellung einer Installation auch möglich, wenn bestimmte Ereignisse von dem Sensorelement detektiert werden, wobei es sich bei diesen nicht um Ereignisse der Installation oder seines Aktors selbst handeln muss.

Die Konzeption einer Einrichtung mit einem solchen Sensor mit einer ortsaufgelösten Erfassung bzw. Erkennung innerhalb seines Überwachungsraumes (Erfassungsbereiches) ermöglicht, eine Vielzahl von Installationen durch diesen einen Sensor zu überwachen. Insofern verfügt ein solchermaßen konzipiertes Gebäudeinstallationssystem über typischerweise einen, jedem Raum zugeordneten zentralen Sensor. Je nach Raumgröße oder Verwinkelung des Raumes oder optischer Hindernisse, wie etwa Stellwände oder Schränke kann es sich jedoch anbieten, unter Umständen mehrere derartiger Sensoren der vorgenannten Art einzusetzen. In der Regel dürfte es jedoch ausreichend sein, einen Raum mit einem einzigen solchen Sensor auszustatten. Entsprechend gering ist der notwendige Installationsaufwand. Vielmehr wird grundsätzlich für den Einsatz eines solchen Sensors in vorhandene raumbezogene Installationen lediglich ein Busteilnehmerplatz benötigt. Dabei ist von Vorteil, dass dem Sensor die Steuereinheit unmittelbar zugeordnet ist, mithin beide Module des Sensors typischerweise in einer Baugruppe vereint sind. Sodann brauchen über den Bus nur die an die unterschiedlichen Aktoren gerichteten Ansteuerbefehle geschickt zu werden; das vorgeschaltete Auslesen der Wandlerelemente bzw. von Gruppen von Wandlerelementen sowie das anschließende Auswerten erfolgt innerhalb des Sensors. Möglich ist es auch, anstelle oder allein für einen oder mehrere Installationen, diese unabhängig von einem drahtgebundenen Bussystem auf drahtlosem Wege anzusteuern, beispielsweise mittels einer Infrarot-Strecke. In einem solchen Fall ist dem Sensor ein IR-Sender und dem oder den auf dieser Strecke angesteuerten Aktoren ein IR-Empfänger zugeordnet. Typischerweise verfügt ein solcher Sensor ohnehin über eine IR-Lichtquelle, um den Raum und/oder die darin installierten Aktoren bzw. Installationen überwachen zu können, wenn kein oder kein hinreichendes Tageslicht oder keine hinreichende Raumbeleuchtung mit sichtbarem Licht zur Verfügung steht. Dabei ist es zweckmäßig, wenn eine solche Beleuchtung zur Überwachung der Installationen und/oder des Raumes nicht kontinuierlich, sondern gepulst betrieben wird. Es versteht sich, dass mit einer solchen IR-Lichtquelle diejenigen Installationen zumindest soweit beleuchtet werden, wie dieses für eine Überwachung von dem Sensor notwendig ist. Typischerweise wird ein solcher Sensor als Raum überwachender Sensor eingesetzt sein. Sodann dient eine solche IR-Lichtquelle zum Ausleuchten des Raumes. Der vorstehend genannte Begriff des Beleuchtens einer Installation oder eines Teils davon bezieht sich auf die von dem Sensor erfassbare Bandbreite. Dabei sind die IR-Ausleuchtungssequenzen mit den Aufnahmesequenzen, d.h. mit den Sequenzen zum Auslesen der Wandlerelemente des Sensorelementes synchronisiert. Daher sind für eine Ansteuerung von Aktoren mit IR-Strahlung sensorseitig grundsätzlich keine weiteren Aggregate notwendig. Eine solche Ansteuerung entlastet die Buskommunikation und ist im Unterschied zu einer grundsätzlich auch möglichen Funkansteuerung von Aktoren streng raumbezogen.

Von Vorteil ist, dass das Auslesen des Sensorelementes wandlerelementgruppenbezogen (pixelgruppenbezogen) vorgenommen werden kann. Dieses reduziert den Datenverarbeitungsaufwand hinsichtlich des Erhalts der gewünschten Information erheblich. Schließlich ist der dann zu verarbeitende Datenumfang auf denjenigen Umfang reduziert, der zum Erlangen einer bestimmten Information tatsächlich nur benötigt wird. Vorzugsweise werden die einzelnen Pixelgruppen des Sensorelementes zyklisch ausgelesen, wobei bevorzugt nur eine Pixelgruppe auf einmal ausgelesen wird. Die sich hieraus ergebenden Vorteile liegen insbesondere in einem geringeren Hardwareaufwand und in einer rascheren Datenverarbeitung begründet. Dabei kann vorgesehen sein, dass die Pixelgruppen zyklisch nach einander ausgelesen werden. Ebenfalls besteht die Möglichkeit, einzelne Pixelgruppen in unterschiedlichen Zeitintervallen in Abhängigkeit von dem Zustand und/oder der Stellung einer überwachten Installation oder eines anderen Überwachungsobjektes vorzusehen. Die Auslesehäufigkeit und/oder Auswertehäufigkeit einer Pixelgruppe kann daher geändert werden. Somit besteht die Möglichkeit, eine Grundüberwachung einer Pixelgruppe in größeren Zeitabständen und damit in geringerer Frequenz im Rahmen eines Sleep- oder Stand-by-Modus durchzuführen und die Auslesefrequenz dieser Pixelgruppe zu erhöhen, wenn ein Ereignis zum Ansteuern eines Aktors einer Installation detektiert worden ist. Dabei kann die Umstellung der Auslesefrequenz einer Pixelgruppe dazu führen, dass auch die Auslesefrequenz von anderen Pixelgruppen oder auch des gesamten Sensorelementes erhöht wird, vor allem dann, wenn bestimmte Installationen und/oder Überwachungsobjekte in einem gewissen Zusammenhang zueinander stehen. Nach Ansteuern des Aktors und Erfassen der gewünschten Stellung der Installation kann die Auslesehäufigkeit und/oder die Auswertehäufigkeit wieder in einer Sleep- oder Stand-by-Modus reduziert werden. Dieses spart Strom. Ebenfalls sind Zwischenzustände möglich, bei denen zunächst die Auslesefrequenz nicht oder nur geringfügig herabgesetzt wird, während die Auswertefrequenz direkt in den Sleep- oder Stand-by-Modus gebracht wird.

Die Funktionalität eines solchen Gebäudeinstallationssystems ist vor allem durch die Implementierung eines zweidimensionalen optoelektronischen Sensorarray gegeben. Aufgrund des ortsaufgelösten optischen Erfassens bzw. Erkennens des Raumes eignet sich der Sensor auch als Eingabemedium zum manuellen Ansteuern von Aktoren von in dem Raum befindlichen Installationen. Somit ist es mit diesem Sensor möglich, beispielsweise die Raumbeleuchtung als einen möglichen Aktor dadurch zu beeinflussen, also etwa einzuschalten, auszuschalten oder zu verstellen, dass beispielsweise die Hand einer in dem Raum befindlichen Person an eine systemseitig zuvor definierte Stelle in dem Raum bewegt wird und an dieser Stelle über eine vorgegebene Mindestzeitdauer verbleibt. Eine solche Stelle kann in dem Raum beispielsweise durch eine vordefinierte Schraffur, ein vordefiniertes Muster und/oder einen Farbpunkt kenntlich gemacht sein. Dabei kann vorgesehen sein, dass zwei unterschiedliche, benachbart zu einander angeordnete Markierungen der vorgenannten Art unterschiedliche Stellungen oder Zustände eines Aktors symbolisieren, beispielsweise ein roter Kreis eine Aus-Stellung und ein grüner Kreis eine Ein-Stellung. Dabei können derartige Schalterfassungsflächen vordefiniert sein, sodass ein Einlesen bzw. ein Erlernen derselben durch den Sensor nicht notwendig ist. Die Ortsauflösung des Sensors gestattet auch eine Erfassung von vordefinierten Gesten einer in dem Raum befindlichen Person, die als Eingabebefehle zum Ansteuern eines Aktors einer Installation ausgewertet werden können. Es versteht sich, dass bei einer solchermaßen eingerichteten Konzeption eines Gebäudeinstallationssystems grundsätzlich keine mechanischen Schalter- und/oder Bedienkonsolen benötigt werden. Entsprechend gering ist der Verkabelungsaufwand, verglichen mit herkömmlichen Gebäudeinstallationssystemen, die dieselbe Funktionalität aufweisen sollen.

Dem Sensorelement vorgeschaltet ist typischerweise ein seinen üblichen Erfassungsbereich optisch vergrößerndes Element. Hierbei kann es sich beispielsweise um einen Panoramaspiegel handeln, auf dem das Sensorelement in Aufnahmerichtung gerichtet ist. Dieses ist ohne weiteres möglich, da es für die Funktionalität des Sensors grundsätzlich nicht darauf ankommt, ob der oder die Installationen oder auch andere Begebenheiten, Ereignisse oder Aktionen, wie beispielsweise eine Gestik unverzerrt erfasst werden, solange das jeweils charakteristische erkennbar ist.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- Fig. 1:: eine schematisierte Einsicht in einen Raum eines im Übrigen nicht näher dargestellten Gebäudes mit einem darin installierten Gebäudeinstallationssystem und

- Fig. 2:: eine schematisierte Darstellung nach Art eines Blockschaltbildes des Gebäudeinstallationssystems der Figur 1.

In einem Raum 1 eines nicht näher dargestellten Gebäudes sind mehrere Installationen eines Gebäudeinstallationssystems eingebaut. Teil des Gebäudeinstallationssystems ist eine Einrichtung zum Ansteuern und Überwachen des Zustandes und/oder der Stellung zumindest einer durch einen Aktor ansteuerbaren Gebäudeinstallation. Teil dieser Einrichtung ist ein Sensor 2 zum Überwachen und Ansteuern von in dem Raum 1 verbauten Installationen. Der Sensor 2 verfügt über ein Sensorelement zum ortsaufgelösten optischen Erfassen des Raumes 1, welches zu diesem Zweck über ein zweidimensionales Sensorelement, gebildet aus einer Vielzahl optoelektronischer Wandlerelemente, aufweist. Bei dem Sensorelement handelt es sich um ein optoelektronisches Sensorelement. Bei dem dargestellten Ausführungsbeispiel wird ein CMOS-Sensor verwendet, bei dem jedes Pixel adressierbar ist. Zum Erfassen des Raumes 1 und der darin installierten Installationen ist der Sensor 2 mit seinem Sensorelement auf einen Panoramaspiegel 3 gerichtet. Der Panoramaspiegel 3 befindet sich an der Decke 4 des Raumes 1. Der Sensor 2 ist von der Decke 4 abgehängt und befindet sich unterhalb des Panoramaspiegels 3.

In dem Raum 1 des dargestellten Ausführungsbeispieles sind beispielhaft als Installationen folgende Systeme installiert:
- ein Beleuchtungssystem, umfassend zwei Deckenleuchten 5, 5.1
   und
- eine motorisch angetriebene Vertikaljalousie 6.

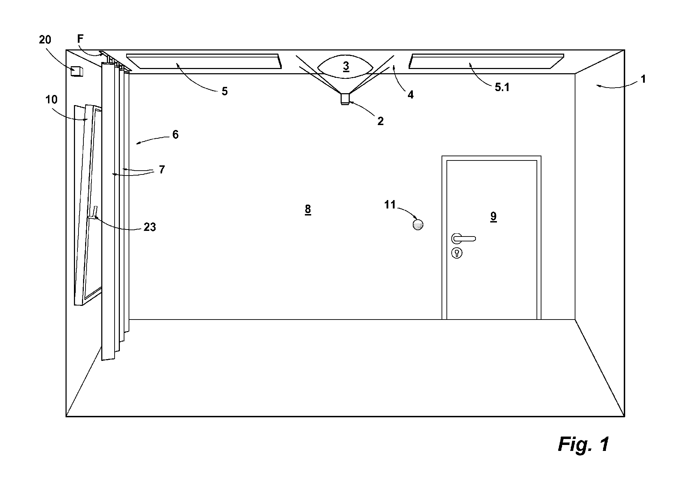

Die einzelnen Lamellen 7 der Vertikaljalousie 6 sind innerhalb einer deckenseitigen Führung F verfahrbar und um ihre Längsachse verschwenkbar. In Figur 1 sind die Lamellen 7 der Jalousie 6 um einige Winkelgrade gegenüber ihrer Offenstellung verstellt. Die Offenstellung ist durch eine Raumlage der Lamellen 7 definiert, in der diese mit ihren Ebenen rechtwinklig zu der angrenzenden Wand stehen.

Aufgrund der Fähigkeit des Sensors 2 bzw. seines Sensorelementes den Raum 1 ortsaufgelöst erfassen und mit einer dem Sensorelement nachgeschalteten Steuereinheit überwachen zu können, können mit dem Sensor 2 nicht nur die vorgenannten Installationen sondern auch andere Begebenheiten oder Objekte in dem Raum 1 überwacht werden. Bei diesen weiteren Objekten handelt es sich beispielsweise um die in die hintere Wand 8 eingebrachte Tür 9 und um ein Fenster 10, welches in Figur 1 in seiner nach innen gekippten Offenstellung gezeigt ist. An der Wand 8 befindet sich neben der Tür 9 ein Farbpunkt 11 als passiver, mechanik- und spannungsloser Lichtschalter.

Mit dem Sensor 2 können nicht nur die in dem Raum 1 installierten Installationen sondern auch weitere Elemente hinsichtlich ihrer Stellung überwacht werden. Zudem ist über dem Sensor 2 eine Raumbelegungserfassung möglich, ebenso wie das Erfassung einer in den Raum 1 eintretenden Person oder auch ein Verlassen des Raumes.

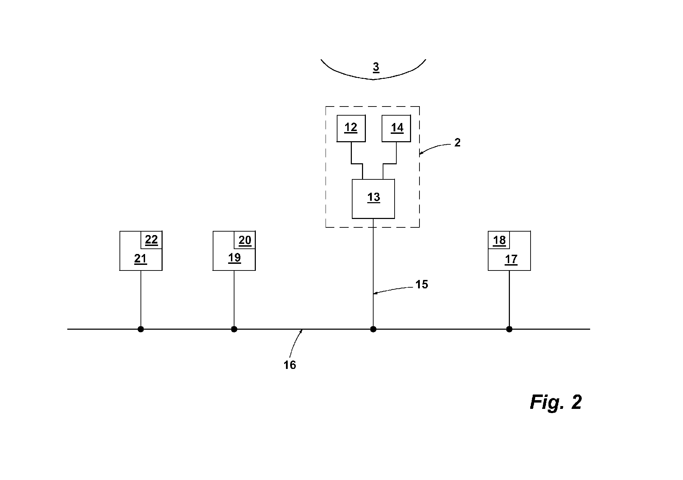

Figur 2 zeigt nach Art eines Blockschaltbildes den Sensor 2 und die Installationen des Gebäudeinstallationssystems der Figur 1. Der Sensor 2 umfasst das bereits vorbeschriebene Sensorelement 12 mit seinen in einer zweidimensionalen Anordnung konzipierten Array von optoelektronischen Wandlerelementen, eine als Mikroprozessor ausgeführte Steuereinheit 13 und eine IR-Lichtquelle 14 (Infrarotlichtquelle). Der Sensor 2 ist, wie aus Figur 1 besser ersichtlich, mit seinem Sensorelement 12 und seiner IR-Lichtquelle 14 zu dem Panoramaspiegel 3 hin gerichtet. Der Sensor 2 ist über eine Anschlussleitung 15 und einen nicht näher dargestellten Busankoppler an einen Bus 16 angeschlossen. Bei dem Bus 16 handelt es sich um den dem Raum 1 zugeordneten Ast eines sich durch das gesamte Gebäude erstreckenden Bussystems.

Angeschlossen an den Bus 16 ist neben dem Sensor 2 eine Beleuchtungseinrichtung 17 mit den beiden in Figur 1 gezeigten Leuchten 5, 5.1. Teil der Beleuchtungseinrichtung 17 ist zudem ein in Figur 1 nicht dargestellter IR-Empfänger 18. Des Weiteren ist an dem Bus 16 die Jalousieinstallation 19 mit der Vertikaljalousie 6 angeschlossen. Teil der Jalousieinstallation 19 ist ein IR-Empfänger 20 (siehe auch Figur 1). Im Wege eines Beispieles ist an den Bus 16 eine weitere, nicht näher definierte Installation 21 mit einem IR-Empfänger 22 angeschlossen.

Das zweidimensionale Sensorarray des Sensorelementes 12 des Sensors 2 ist in bestimmte Wandlerelementgruppen aufgeteilt, und zwar in Abhängigkeit von dem zu überwachenden Erfassungsausschnitt. So ist bei dem dargestellten Ausführungsbeispiel eine Wandlerelementgruppe diejenige, mit der die Stellung des Fensters 10 und/oder die Stellung des Fenstergriffes 22 erfasst werden kann. Eine weitere Wandlerelementgruppe ist zum Erfassen der Stellung der Lamellen 7 der Vertikaljalousie 6, mithin zum Überwachen der Jalousieinstallation 19 eingerichtet. Einige wenige Wandlerelemente des Sensorelementes 12 sind für eine Helligkeitserfassung innerhalb des Raumes vorgesehen. Wiederum ein anderer Bereich aus dem Array des Sensorelementes 12 dient zum Erfassen von Bewegungen im Bereich der Türe 9. Diejenigen Wandlerelemente, auf denen der Farbpunkt 11 und dessen unmittelbare Umgebung abgebildet werden, bilden bei dem dargestellten Ausführungsbeispiel wiederum eine eigene Wandlerelementgruppe. Derjenige Bereich des Sensorelementes 12, auf den der mittlere Bereich des Raumes 1 abgebildet wird, bildet noch eine weitere Wandlerelementgruppe. Die Wandlerelementgruppen können unabhängig voneinander ausgelesen und ausgewertet werden. Dabei ist es durchaus möglich, eine oder auch mehrere Wandlerelementgruppen in Untergruppen zu teilen, wenn hierfür Anwendungen gewünscht werden. Dieses kann beispielsweise für denjenigen Bereich des Sensorelementes 12 vorgesehen sein, in dem der mittlere Raumbereich abgebildet wird, wenn in diesem beispielsweise ein kleinerer Bereich für eine Gestenerkennung definiert ist. Ein solcher Bereich kann benutzerseitig beispielsweise durch eine auf einen in den Raum gestellten Tisch aufgebrachte Kennzeichnung markiert sein.

Durch Anschluss des Sensors 2 an den Bus 16 können Wandlerelementgruppen des Sensorelementes 12 bei Bedarf frei definiert oder auch geändert werden. Grundsätzlich ist auch eine Wandlerelementgruppenprogrammierung innerhalb des Raumes 1 durch Abgrenzen bestimmter Bereiche beispielsweise durch Lichtpunkte möglich. Die Funktionalität des Gebäudeinstallationssystems ist auch durch seine besondere Anpassbarkeit an sich ändernde Begebenheiten innerhalb des Raumes besonders hoch.

Zum Überwachen der unterschiedlichen Bereiche und zum Überwachen der Stellung bzw. der Zustände der Installationen in dem Raum 1 dient einzig der Sensor 2, der soweit benötigt, den Raum 1 über den Panoramaspiegel 3 erfasst.

Da die Erfassung und Überwachung Licht voraussetzt, und eine solche Überwachung bei Dunkelheit nicht ohne zusätzliche Lichtquelle möglich ist, verfügt der Sensor 2 über die IR-Lichtquelle 14. Das von dieser emittierte Licht mit einer Wellenlänge in einem für das menschliche Auge nicht sichtbaren, für das Sensorelement 2 hingegen sichtbaren, im Sinne von erfassbaren Bereich strahlt bei dem dargestellten Ausführungsbeispiel über den Panoramaspiegel 3 in den Raum und leuchtet diesen auf diese Weise aus. Bei Dunkelheit dient die IR-Lichtquelle 14 somit zum hinreichenden Beleuchten des Raumes 1, damit die gewünschten Überwachungsvorgänge mittels des Sensorelementes 12 durchgeführt werden können. Es versteht sich, dass die Wandlerelemente ebenfalls IRempfindlich sind. Zu diesen auch bei Dunkelheit ablaufenden Überwachungsvorgängen zählt beispielsweise das Überwachen der Stellung der Türe 9, ob diese geöffnet oder geschlossen ist. Ferner zählt dazu eine Überwachung des Farbpunktes 11, da dieser als passiver Lichtschalter benutzt wird, und zwar dahingehend, ob die Hand einer in den Raum 1 eingetretenen Person diese auf den Farbpunkt 11 aufgelegt oder mit geringem Abstand zu diesem diesen abgedeckt. Aus Redundanzgründen ist bei diesem Ausführungsbeispiel vorgesehen, dass zum Erkennen einer gewünschten Beleuchtungsaktivität die Hand der Person für eine gewisse Zeitspanne (beispielsweise 1 bis 2 Sekunden) in dieser den Farbpunkt 11 abdeckenden Position verbleibt. Durch die von dem Sensorelement 12 in der dem Farbpunkt 11 zugeordneten Wandlerelementgruppe ausgelesenen Daten wird ein solches Ereignis erfasst und durch eine diesbezüglich vorprogrammierte Definition als Befehl, die Beleuchtung zu ändern, ausgewertet. Da bei dem dargestellten Ausführungsbeispiel über den Sensor 2 die Stellung der Türe 9 erfasst wird, und zwar dahingehend, ob eine Person in den Raum 1 eintritt oder nicht, und die Beleuchtungseinrichtung 17 mit ihren beiden Leuchten 5, 5.1 bei Erkennen einer solchen Situation auf eine erste Stufe geringer Helligkeit gefahren wird, erfolgt eine Beeinflussung der Beleuchtungseinrichtung 17 über den passiven Lichtschalter, wie vorbeschrieben, zum Erhöhen der Helligkeit. Ausgehend von der jeweils aktuellen Stellung der Beleuchtungseinrichtung wird ein über den Farbpunkt systemseitig kenntlich gemachter Befehl zum Ändern der Ein-stellung der Beleuchtungseinrichtung 17 unterschiedlich bewertet. Befindet sich die Beleuchtungseinrichtung 17 auf maximaler Beleuchtungsstärke, werden bei Erkennen eines solchen Befehls die Leuchten 5, 5.1 gedimmt. Dabei kann über die Dauer des Haltens der Hand auf oder vor dem Farbpunkt ein Maß für die gewünschte Dimmstellung ausgewertet werden.

Nach einem systemseitig vorgegebenen Algorithmus wird etwa bei einer zu hohen Sonneneinstrahlung durch das Fenster 7 oder auch bei ungünstigen Kontrastverhältnissen die Jalousieinstallation 19 entsprechend angesteuert, und zwar zum Schließen oder zum Teilschließen der Lamellen 7 der Jalousie 6. Über den Sensor 2 und sein Sensorelement 12 ist eine Kontrolle der Stellung der Jalousie 6 als Installation möglich. Entspricht die Stellung der Lamellen 7 der Jalousie 6 nicht der gewünschten, wird durch die Steuereinheit 13 des Sensors 2 der Aktor der Jalousieinstallation 19 angesteuert, um die Lamellen 7 der Jalousie 6 in die gewünschte Stellung zu bringen. Dieses Nachregeln erfolgt ebenso wie das eigentliche Ansteuern bei dem dargestellten Ausführungsbeispiel auf einer IR-Strecke, wobei zu diesem Zweck die IR-Lichtquelle 14 des Sensors 2 entsprechend gepulst betrieben wird. In sofern dient bei diesem Ausführungsbeispiel die IR-Lichtquelle 14 als Datenübertragungsmittel zum Ansteuern des Aktors. Der IR-Empfänger 20 der Jalousieinstallation 19 empfängt die Daten und steuert entsprechend den Jalousieaktor an. Dieses anhand der Jalousieinstallation 19 beschriebene Beispiel macht deutlich, dass mittels des Sensors 2 unmittelbar eine Überwachung vorgegebener Stellungen einer Installation und ein ggf. notwendiges Nachregeln möglich ist.

Anstelle einer Ansteuerung eines oder aller Aktoren auf einer IR-Strecke, wie vorstehend beschrieben, können die Aktoren, da diese über den Bus 16 in einer Datenverbindung mit dem Sensor 2 stehen, auch über diese Datenleitung von der Steuereinheit 13 des Sensors 2 angesteuert werden. Ebenfalls ist ein Mischbetrieb möglich.

Mit dem Sensor 2 kann bei Vorliegen bestimmter Gegebenheiten auch eine Aktoransteuerung gesperrt werden. Dieses ist in Bezug auf die vorbeschriebene Jalousieinstallation 19 beispielsweise dann der Fall, wenn diese aus ihrer Offenstellung, in der die Lamellen 7 sämtlich in Richtung zur Wand 8 gefahren sind, geschlossen werden sollen und das Fenster 7 vollständig nach innen aufgeschwenkt ist. Wird mittels des Sensors 2 ein Hindernis, wie vorbeschrieben beispielsweise das geöffnete Fenster 10, detektiert, welches sich in der Spur des Weges der Lamellen 7 der Jalousie 6 befindet, reagiert der Jalousieaktor nur so weit möglich, dass von der oder den Lamellen 7 das Hindernis nicht berührt wird. Durch das ortsaufgelöste Erfassen der Bewegung der Lamellen 7 der Jalousie 6 kann dieses ohne weiteres kontrolliert werden. Zusätzlich kann an einen Benutzer ein Signal ausgegeben werden, welches auf die Nichtausführung des Schließens des Jalousie und somit auf das Hindernis hinweist.

Durch die Möglichkeit der Erkennung der Fensterstellung mit dem Sensor 2 kann dieses beispielsweise Einfluss auf die Ansteuerung der Raumheizung haben. Ebenso besteht die Möglichkeit, bei Erfassen eines solchen Zustandes ein Signal auszugeben, welches der letzten, den Raum 1 verlassenden Person die Fensterstellung anzeigt, damit er das Fenster schließt.

Die ortsaufgelöste Erfassung des Raumes 1 ermöglicht auch eine individuelle Einrichtung von bestimmten Bereichen in dem Raum, die eine Überwachungseinheit ausbilden sollen.

Bei dem dargestellten Ausführungsbeispiel erfolgt eine Ansteuerung der Aktoren der Installationen auf einer IR-Strecke. Da es bei dem dargestellten Ausführungsbeispiel die Aktoren an einen Bus - den Bus 16 - angeschlossen sind, können diese ebenfalls über den Bus 16 von der Steuereinheit 13 angesteuert werden.

Für die vorbeschriebenen Überwachungszwecke können in einem Raum auch mehrere derartiger Sensoren angeordnet sein. Dieses bietet sich dann an, wenn Räume verwinkelt sind und/oder mit einem Sensor nicht der gesamte gewünschte Bereich abgedeckt werden kann. Sinnvoll kann dieses auch aus Informationsredundanzgründen sein oder wenn bestimmte zu überwachende Objekte bei bestimmten Installationsstellungen und/oder Raumbelegungen gegenüber dem zur Überwachung vorgesehenen Sensorelement abgedeckt sind. Eine derartige Ausgestaltung ist auch dann zweckmäßig, wenn die Sensorelemente der Sensoren ausgerichtet sind, damit der Überwachungsbereich dreidimensional erfasst werden kann. Dieses ermöglicht eine bessere Erkennung etwa von Gesten, sollte eine Gestenerkennung vorgesehen sein oder eine bessere Erkennung von Bewegungen von Personen oder überwachten Installationen. Ist eine dreidimensionale Überwachung vorgesehen, kann ein solcher Sensor auch über zwei (oder mehr) Sensorelemente verfügen, die an eine gemeinsame Steuereinheit angeschlossen sind und von dieser nacheinander ausgelesen werden. Gerade deswegen, weil typischerweise die Pixel der Sensorelemente der zur Überwachung bestimmten Bereiche und/oder Objekte gruppiert sind und daher die Zahl der Pixel eines solchen Überwachungsbereiches nicht sonderlich groß zu sein braucht, können die jeweils einem zu überwachenden Raumbereich und/oder Objekt zugeordneten Pixelgruppen der einzelnen Sensorelemente eines solchen Sensors in kurzer Zeit nacheinander ausgelesen werden.

Bei Vorsehen von mehreren Sensoren kann sich anbieten, dass diese miteinander auf einer IR-Strecke kommunizieren, und zwar zweckmäßiger weise unter Verwendung der ohnehin vorhandenen IR-Lichtquelle. In einem solchen Fall verfügen die Sensoren über einen IR-Empfänger oder haben einige Pixel ihres oder ihrer Sensorelemente für einen solchen IR-Datenempfang reserviert. Eine solche Kommunikation wird typischerweise nach dem Master-Slave-Prinzip vorgenommen werden, wobei ein erster Sensor als Master und die weiteren Sensoren als Slave definiert sind.

Die Beschreibung der Erfindung erfolgte anhand eines Ausführungsbeispiels. Die Ausführungen machen deutlich, dass das beschriebene Gebäudeinstallationssystem einem Anwender eine Vielzahl von weiteren Möglichkeiten bietet. Hierzu zählt auch, ein solches System an bestimmte Raumbenutzungen anzupassen, beispielsweise durch einen Selbstlernmodus. Auch ist es möglich, unter Ausnutzung des beschriebenen Gebäudeinstallationssystems durch Verwendung einer Schaltsymbolerkennung wie beispielsweise durch Gestik oder die genannten Schraffuren, Muster und/oder Farbpunkte Aktoren außerhalb des Raumes anzusteuern. Ohne den Umfang der Ansprüche zu verlassen, ergeben sich für einen Fachmann zahlreiche weitere Ausgestaltungen, die Erfindung umsetzen und/oder erweitern zu können, ohne dass dieses im Einzelnen im Rahmen dieser Ausführung dargelegt werden müsste.

### Bezugszeichenliste

- 1: Rau m
- 2: Sensor
- 3: Panoramaspiegel
- 4: Decke
- 5, 5.1: Deckenleuchte
- 6: Jalousie
- 7: Lamelle
- 8: Wand
- 9: Tür
- 10: Fenster
- 11: Farbpunkt
- 12: Sensorelement
- 13: Steuereinheit
- 14: IR-Lichtquelle
- 15: Anschlussleitung
- 16: Bus
- 17: Beleuchtungseinrichtung
- 18: IR-Empfänger
- 19: Jalousieinstallation
- 20: IR-Empfänger
- 21: Installation
- 22: IR-Empfänger
- 23: Fenstergriff
- F: Führung

## Patentansprüche

1. Einrichtung zum Ansteuern und Überwachen des Zustandes und/oder der Stellung zumindest einer durch einen Aktor ansteuerbaren Gebäudeinstallation eines Gebäudeinstallationssystems mit zumindest einer in einem Raum (1) angeordneten, durch einen Aktor beeinflussbaren Installation (17, 19, 21) und einer Einrichtung zum Ansteuern des Aktors, **dadurch gekennzeichnet, dass** die Einrichtung zum Ansteuern des Aktors über einen Sensor (2) zur Überwachung des Zustandes und/oder der Stellung der zumindest einen Installation (17, 19, 21) verfügt, umfassend eine Vielzahl, in einer zweidimensionalen Anordnung angeordnete optoelektronische Wandlerelemente aufweisendes Sensorelement (12), nach seiner Installation in dem Raum (1) angeordnet, um den Zustand und/oder die Stellung der zumindest einen Installation (17, 19, 21) erfassen zu können, sowie eine zum Auslesen und Auswerten des Sensorelements (12) dienende Steuereinheit (13), welche Steuereinheit (13) Mittel (14) zum Ansteuern des Aktors der zumindest einen Installation (17, 19, 21) in Abhängigkeit von der Auswertung von aus dem Sensorelement (12) ausgelesenen Daten umfasst.

2. Einrichtung nach Anspruch 1, **dadurch gekennzeichnet, dass** das Sensorelement (12) ein aktiver Pixelsensor, gefertigt in CMOS-Technik ist.

3. Einrichtung nach Anspruch 1 oder 2, **dadurch gekennzeichnet, dass** das Sensorelement (12) in Aufnahmerichtung auf einen Panoramaspiegel (3) zum Erfassen von in dem Raum (1) an unterschiedlichen Stellen angeordneten Aktoren und/oder Installationen (17, 19, 21) gerichtet ist.

4. Einrichtung nach einem der Ansprüche 1 bis 3, **dadurch gekennzeichnet, dass** der Einrichtung eine IR-Lichtquelle (14) zur Ausleuchtung des Raumes (1) und/oder Beleuchtung der Aktoren bzw. der durch die Aktoren angesteuerten Installationen (17, 19, 21) zugeordnet ist.

5. Einrichtung nach einem der Ansprüche 1 bis 4, **dadurch gekennzeichnet, dass** zum Ansteuern eines Aktors durch die Steuereinheit (13) ein Ansteuerbefehle absetzender Sender als Mittel (14) zur Datenübertragung vorgesehen ist, und dass der durch die Steuereinheit (13) ansteuerbare Aktor über einen entsprechenden Empfänger (18, 20, 22) verfügt.

6. Einrichtung nach Anspruch 5, **dadurch gekennzeichnet, dass** zum Ansteuern eines Aktors durch die Steuereinheit (13) eine drahtgebundene Verbindung zwischen der Steuereinheit (13) und dem zumindest einen Aktor vorhanden ist.

7. Einrichtung nach Anspruch 6, **dadurch gekennzeichnet, dass** zur drahtgebundenen Verbindung zwischen der Steuereinheit (13) und dem Aktor ein Bussystem vorgesehen ist und zu diesem Zweck die Steuereinheit (13) und der zumindest eine Aktor als Busteilnehmer an den Bus (16) angeschlossen sind.

8. Einrichtung nach Anspruch 5, **dadurch gekennzeichnet, dass** zum Ansteuern des Aktors durch die Steuereinheit (13) eine drahtlose Kommunikation vorgesehen ist.

9. Einrichtung nach Anspruch 8, **dadurch gekennzeichnet, dass** für die drahtlose Ansteuerung des Aktors eine IR-Strecke vorgesehen ist und die Steuereinheit (13) über einen IR-Sender (14) und ein von der Steuereinheit (13) anzusteuernder Aktor der zumindest einen Installation (17, 19, 21) über einen IR-Empfänger (18, 20, 22) verfügt.

10. Einrichtung nach Anspruch 9, **dadurch gekennzeichnet, dass** der dem Sensor (2) zugeordnete IR-Sender als Mittel (14) zur Datenübertragung vorgesehen ist, damit zumindest ein IR-Empfänger (18, 20, 22) von mehreren oder auch von allen in dem Raum (1) von der Steuereinheit (13) anzusteuernde Aktoren durch die von dem IR-Sender (14) emittierte Strahlung beaufschlagt sind.

11. Einrichtung nach Anspruch 9 oder 10 in ihrem Rückbezug auf Anspruch 4, **dadurch gekennzeichnet, dass** der IR-Sender die IR-Lichtquelle (14) zur Raumausleuchtung ist.

12. Verfahren zum Überwachen einer in einem Raum (1) angeordneten, durch einen Aktor beeinflussbaren Installation (17, 19, 21), **dadurch gekennzeichnet, dass** zumindest ein durch einen Aktor der zumindest einen Installation (17, 19, 21) beeinflussbares Element ortsaufgelöst mittels eines bildgebenden Sensorelementes (12) überwacht wird, um den Zustand und/oder die Stellung der zumindest einen Installation (17, 19, 21) erfassen zu können, wobei für die Überwachung unterschiedlicher Bereiche des Raumes bzw. der darin installierten zumindest einen Installation (17, 19, 21) unterschiedliche Pixelgruppen des bildgebenden Sensorelementes (12) ausgewertet werden und dass in Abhängigkeit von dem Ergebnis der Auswertung der aus den Pixelgruppen ausgelesenen Daten ein Aktor einer Installation über eine Steuereinheit (13) angesteuert wird.

13. Verfahren nach Anspruch 12, **dadurch gekennzeichnet, dass** die einzelnen Pixelgruppen des Sensorelementes zyklisch ausgelesen werden.

14. Verfahren nach Anspruch 12 oder 13, **dadurch gekennzeichnet, dass** ein von der Steuereinheit (13) anzusteuernder Aktor einer Installation über ein Bussystem, an welches das Sensorelement (12) sowie die Steuereinheit (13) angeschlossen sind, angesteuert wird.

15. Verfahren nach Anspruch 12 oder 13, **dadurch gekennzeichnet, dass** ein Aktor einer anzusteuernden Installation auf drahtlosem Wege, beispielsweise auf einer IR-Strecke angesteuert wird.
